# FASCICULE DE BREVET EUROPEEN

(11) **EP 2 815 222 B1**
(45) Date de publication et mention de la délivrance du brevet: **29.04.2020**
(21) Numéro de dépôt: 13706212.1
(22) Date de dépôt: 15.02.2013
(51) Int. Cl.: G01M 3/14, G01M 17/02, B29D 30/06, B29D 30/00

(54) **MÉTHODE DE TEST DE LA RÉSISTANCE À UNE PERTE DE PRESSION D'UN PNEUMATIQUE**
VERFAHREN ZUM TESTEN DER BESTÄNDIGKEIT EINES REIFENS GEGENÜBER DRUCKVERLUST
METHOD FOR TESTING THE RESISTANCE OF A TIRE TO PRESSURE LOSS

(30) Priorité: 16.02.2012 FR 1251436
(43) Date de publication de la demande: 24.12.2014
(73) Titulaire: Compagnie Générale des Etablissements Michelin, 63000 Clermont-Ferrand (FR)
(72) Inventeur: MERINO LOPEZ, Jose, F-63040 Clermont-ferrand Cedex 9 (FR); AHOUANTO, Michel, F-63040 Clermont-ferrand Cedex 9 (FR)
(74) Mandataire: Roussy, Delphine
(86) Numéro de dépôt international: PCT/EP2013/053121
(87) Numéro de publication internationale: WO 2013/121019

(56) Documents cités:
- EP-A2- 0 753 420
- WO-A1-99/62998
- WO-A1-2009/135004
- FR-A1- 2 334 518
- FR-A1- 2 489 347
- US-A- 2 756 801
- US-A- 3 843 586
- US-A- 4 282 052
- US-A- 4 501 825

## Description

### Domaine de l'invention

La présente invention est relative aux pneumatiques, et plus particulièrement à une méthode de test de la résistance à une perte de pression consécutive à une perforation d'un pneumatique.

### État de la technique

Lors d'une perforation de la paroi d'un pneumatique par un objet perforant tel une vis ou un clou, ou « crevaison », l'air de gonflage du pneumatique peut s'échapper par la perforation et la perte de pression consécutive entraîner une mise à plat du pneumatique et un arrêt du véhicule.

Le délai entre la perforation et la mise à plat du pneumatique est très variable, en fonction notamment de la taille de l'objet perforant mais aussi de la poursuite ou non du roulage avec l'objet perforant en place dans la paroi du pneumatique. Ce roulage entraîne des mouvements relatifs entre l'objet perforant et la paroi du pneumatique ce qui agrandit souvent la perforation et accélère le débit de fuite.

Pour résoudre ce problème des crevaisons qui date du début même de l'utilisation des roues chaussées de pneumatiques gonflés, la solution usuelle est de s'arrêter et de remplacer la roue concernée par une roue de secours.

D'autres solutions ont été imaginées et sont disponibles sur le marché pour éviter d'avoir à utiliser une roue de secours.

Le document US 5 916931 présente un récipient aérosol comportant une émulsion aqueuse de latex mélangée avec différents produits dont des produits fibreux et un gaz propulseur. En cas de pneumatique à plat, ce récipient est prévu pour être fixé à la valve du pneumatique et pour envoyer dans la cavité interne du pneumatique le gaz propulseur et l'émulsion d'obturation / réparation. Le pneumatique est alors regonflé au moins partiellement, l'émulsion colmate la perforation et on peut recommencer à rouler, à vitesse réduite d'abord pour bien répartir l'émulsion sur toute la surface interne du pneumatique puis normalement.

Il existe aussi des kits de réparation, proposés par certains constructeurs automobiles en lieu et place d'une roue de secours. Cela a pour intérêt de réduire le poids de la voiture, donc sa consommation de carburant et de libérer de l'espace sous le plancher du coffre.

Le kit de crevaison se compose d'un compresseur, d'une bouteille de produit d'étanchéité, d'un câble de raccordement électrique et d'un flexible d'air. Une fois la bouteille de produit fixée sur le compresseur, le flexible d'air vissé sur la bouteille et sur la valve du pneumatique et le câble électrique branché sur l'allume cigares du véhicule, il n'y a plus qu'à mettre l'interrupteur du compresseur sur « on », tout en laissant tourner le moteur pour ne pas décharger la batterie.

Le produit d'étanchéité se vide dans le pneumatique en environ 30 secondes pendant lesquelles la pression dans le flexible d'air va monter jusqu'à environ 6 bars. Ensuite, l'air gonflera le pneumatique et la pression de gonflage théorique sera atteinte dans les 10 minutes. Une fois la pression atteinte, il n'y a plus qu'à éteindre le compresseur et démonter le kit.

Une fois le pneumatique regonflé, il faut prendre rapidement le volant, parcourir 10 km et vérifier la pression du pneumatique à l'aide du compresseur et du flexible d'air pour la porter au niveau requis.

Une fois le pneumatique crevé réparé, il convient de ne pas dépasser les 80 km/h et de faire contrôler ou changer son pneumatique rapidement. Le kit de réparation des pneumatiques n'est qu'une réparation temporaire.

Les manufacturiers de pneumatiques ont aussi proposé des pneumatiques pourvus sur leur paroi intérieure ou dans leur structure d'une couche de produits élastiques, visqueux ou pâteux, appelés « produits auto-obturants », permettant une obturation des perforations. Le document WO 2008/080556 A1 présente un exemple d'un tel pneumatique. Ces pneumatiques ne sont pas en tant que tel increvables, mais les perforations sont normalement refermées ou obturées par le produit auto-obturant.

Les fabricants de ces différentes solutions présentent tous des résultats remarquables d'obturation des perforations grâce à leurs produits, notamment lors d'une perforation suivie d'un retrait immédiat de l'objet perforant. Dans le document WO200/135004 est décrit une méthode de test de pneumatique comportant un produit auto-obturant. Le test est effectué en insérant des clous dans un pneumatique gonflé, qui subit ensuite un roulage d'une certaine durée. Après le roulage la pression est vérifiée et la présence de fuites autour des clous est vérifiée à l'aide d'eau savonnée.

### Description brève de l'invention

L'invention a pour objet une méthode de test de la résistance d'un pneumatique à une perte de pression consécutive à une perforation, caractérisée en ce qu'elle comporte les étapes suivantes :
- créer dans la paroi du pneumatique une pluralité de perforations en insérant à travers la paroi une pluralité d'objets perforants ;
- faire rouler le pneumatique comportant les objets perforants sur une distance donnée avec une pression de gonflage régulée ;
- arrêter le roulage ; et
- déterminer pour chaque perforation un indice de résistance à la perte de pression basé sur une estimation du débit de fuite de la perforation.

Cette méthode de test a l'avantage d'être très sélective en raison du roulage effectué en présence d'une pluralité d'objets perforants. Ce roulage entraîne des déplacements relatifs des objets perforants et de la paroi du pneumatique qui peuvent élargir les perforations et rendre beaucoup plus difficile leur obturation ou le maintien de leur obturation. L'utilisation d'une pluralité d'objets perforants de types et de diamètres variés couplé à un roulage à pression régulée permet avec un seul pneumatique d'obtenir de nombreux résultats de résistance à la perforation et donc de limiter le nombre d'essais nécessaires. Selon l'invention, il faut réguler la pression de gonflage du pneumatique testé pour compenser des fuites éventuelles susceptibles d'apparaître pendant le roulage, particulièrement en cas d'éjection d'objet perforant. Cela permet d'étudier la performance des perforations liées aux autres objets perforants présents dans le pneumatique.

Cette méthode de test est particulièrement utile pour les pneumatiques comportant un produit auto-obturant, par exemple une couche de produit auto-obturant disposée sur sa paroi intérieure ou dans sa paroi.

Selon un mode particulier de mise en œuvre, lorsque un objet perforant est resté en place pendant le roulage, on détermine un indice de résistance à la perte de pression avec objet perforant en place (I_{P}) basé sur une estimation du débit de fuite.

Lorsque un objet perforant a été éjecté pendant le roulage, on peut déterminer un indice de résistance à la perte de pression après éjection de l'objet perforant (I_{E}) basé sur une estimation du débit de fuite.

On constate que ces deux indices I_{P} et I_{E} sont complémentaires.

Alternativement, la méthode de test selon l'invention peut comporter les étapes complémentaires suivantes après l'arrêt du roulage :
- extraire l'objet perforant de chaque perforation ayant l'objet perforant en place ; et
- déterminer pour chaque perforation dont l'objet perforant a été éjecté au cours du roulage ou extrait à l'issue du roulage un indice de résistance à la perte de pression (I_{E}) basé sur une estimation du débit de fuite.

De préférence, la méthode de test comporte l'étape complémentaire de redéterminer après un temps donné, de l'ordre de 5 à 20 mn, pour chaque perforation dont l'objet perforant a été éjecté au cours du roulage ou extrait à l'issue du roulage un indice de résistance à la perte de pression (I₁₀) basé sur une estimation du débit de fuite.

La méthode peut aussi avantageusement comporter après l'arrêt du roulage, l'extraction de tous les objets perforants en place et la détermination du ou des indices de résistance à la perte de pression l'étape complémentaire suivante :
- faire rouler le pneumatique gonflé sans objet perforant en place ; et
- déterminer pour chaque perforation un indice de résistance à la perte de pression basé sur une estimation du débit de fuite.

La distance de roulage complémentaire sans objet perforant peut être comprise entre 100 et 500 km.

Cette étape complémentaire de roulage permet d'évaluer la tenue dans le temps de l'obturation réalisée par le dispositif d'obturation/réparation étudié.

De préférence, la distance de roulage du pneumatique gonflé comportant l'objet perforant à travers sa paroi est supérieure à 200 km et très préférentiellement supérieure à 500 km.

Le roulage du pneumatique peut être effectué sur un volant.

Ce volant a de préférence un développement supérieur à 16 m.

De préférence, le pneumatique est gonflé avant d'insérer les objets perforants à travers sa paroi.

Cela facilite l'insertion des objets perforants.

Pendant le roulage, la pression de gonflage du pneumatique est régulée et de préférence régulée à une pression comprise entre 1,8 et 3 bars.

De préférence, la vitesse de roulage est supérieure à 90 km/h et très préférentiellement comprise entre 90 et 160 km/h.

De façon avantageuse, on fait varier la vitesse de roulage par paliers de vitesses croissantes.

Ces paliers de vitesses croissantes permettent d'accélérer le test et d'augmenter sa sélectivité.

Avantageusement la pluralité d'objets perforants comprend des vis et des clous de diamètres variés.

Le diamètre des objets perforants est de préférence de 1 à 5 mm.

Avantageusement, la pluralité d'objets perforants comporte de 3 à 30 objets perforants, préférentiellement entre 8 et 20.

Les objets perforants peuvent être insérés dans le sommet du pneumatique à partir de la surface extérieure des sillons de sculpture du pneumatique.

### Description des Figures

Les figures annexées illustrent différents aspects de la méthode de test de la résistance à une perte de pression d'un pneumatique dans le cas d'un pneumatique comportant une couche auto-obturante sur sa paroi intérieure :
- la figure 1 présente quelques objets perforants ;
- la figure 2 est une courbe, en fréquence cumulée, de la distribution des diamètres de clous observée en Chine et aux États-Unis ;
- la figure 3 est une vue de dessus partielle d'un sommet de pneumatique comportant trois perforations ;
- la figure 4 illustre le cas d'une perforation avec débit de fuite nul ;
- les figures 5 (a) et (b) illustrent le cas d'une perforation avec très faible débit de fuite ;
- la figure 6 illustre les cas d'une perforation avec faible débit de fuite ;
- les figures 7 (a) et (b) illustrent les cas d'une perforation avec fuite rapide ; et
- la figure 8 montre le résultat d'un test de résistance à la perforation.

### Description détaillée de l'invention

On teste un pneumatique 1 de dimension 205/55 R 16 Michelin Energy 3 pourvu d'une couche de produit auto-obturant telle que présentée dans la demande WO 2008/080556 A1 précitée.

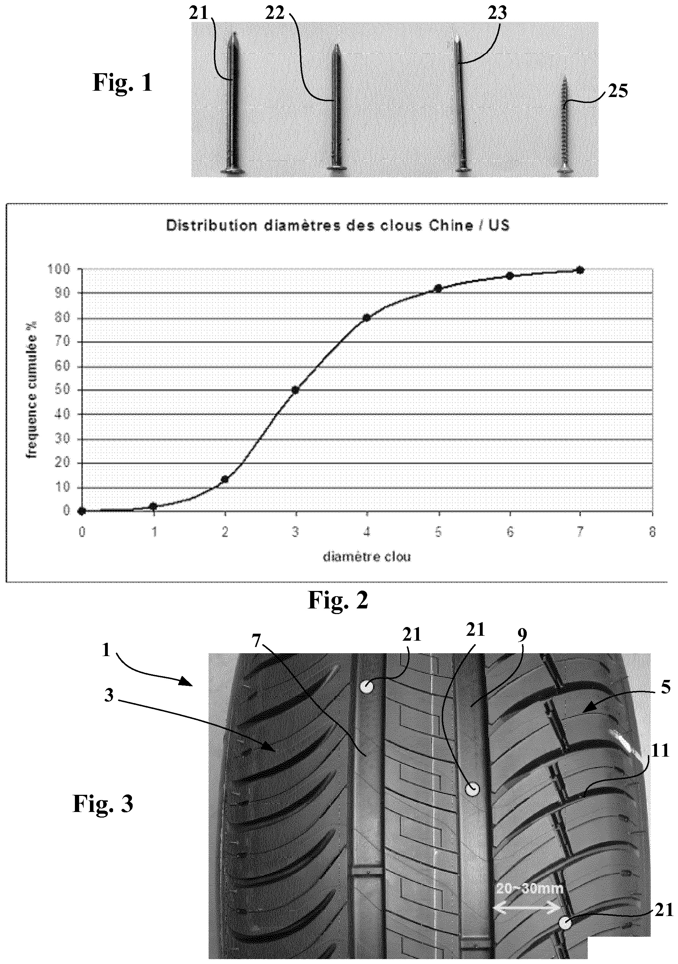

La figure 1 présente quelques exemples d'objets perforants couramment utilisés pour la méthode de test. Il s'agit de clous 21 de diamètre 3 mm, de clous 22 de diamètre 4 mm et de clous 23 de diamètre 5 mm ainsi que de vis 25 de diamètre 3,5 mm.

Les diamètres de ces objets perforants sont tout à fait réalistes des objets perforants rencontrés dans des conditions réelles de roulage. La figure 2 présente en fréquence cumulée la distribution des clous observés sur des routes en Chine et aux États-Unis. On constate que l'ensemble des clous de diamètres inférieurs ou égaux à 5 mm correspond à plus de 90 % des objets rencontrés.

Après avoir monté le pneumatique sur une roue appropriée et l'avoir gonflé à 2,5 bars, on attache rigidement le pneumatique et la roue sur un moyeu rotatif non représenté et on insère à travers le sommet 3 du pneumatique 1 une pluralité d'objets perforants.

La figure 3 présente en vue de dessus partielle le sommet 3 du pneumatique 1. La sculpture du pneumatique comporte deux sillons longitudinaux, intérieur 7 et extérieur 9 ainsi qu'une épaule extérieure 5 avec un ensemble de sillons latéraux 11. Par intérieur ou extérieur, on se réfère au côté du pneumatique destiné à être monté vers l'intérieur du véhicule ou vers l'extérieur du véhicule, la sculpture de ce pneumatique étant asymétrique. A la figure 3, on voit trois perforations par des clous 21 disposées dans le sillon longitudinal intérieur 7, le sillon longitudinal extérieur 9 et dans le sillon latéral 11 de l'épaule extérieure 5.

Sur l'ensemble du sommet, on a inséré trois clous 21 de diamètre 3 mm et de longueur comprise entre 45 et 60 mm, trois clous 22 de diamètre 4 mm et de longueur similaire et trois clous 23 de diamètre 5 mm et de longueur similaire ainsi que trois vis 25 de diamètre 3,5 mm et de longueur comprise entre 35 et 50 mm. Les objets perforants sont régulièrement répartis sur la circonférence du sommet. Le clou 21 disposé dans le sillon 11 de l'épaule sont placés à une distance comprise entre 20 et 30 mm du sillon longitudinal extérieur 9.

De manière non couverte par l'invention, il est aussi possible de perforer le sommet du pneumatique à partir des motifs de la sculpture mais cela demande des efforts de pénétration supérieurs. Cela modifie aussi les conditions d'éjection des objets perforants lors du roulage.

On fixe ensuite l'ensemble pneumatique et roue gonflé sur le moyeu d'une rouleuse de diamètre supérieur à 16 m pour se rapprocher des conditions de roulage sol plan.

Les conditions de roulage sont les suivantes : la pression de gonflage est régulée, par exemple à 2,5 bars, la charge appliquée est de l'ordre de 90 % de la capacité de charge du pneumatique, la température dans l'enceinte de la rouleuse est régulée à environ 20°C et le roulage est un roulage droit, sans couple ni dérive ni carrossage appliqués.

On fait rouler le pneumatique dans ces conditions avec des paliers de vitesse de 10 km/h de 100 à 150 km/h, chaque palier durant 1 heure. Le test complet dure ainsi 6 heures et 750 km.

Pendant le roulage, environ 70 % des clous de 5 mm de diamètre sont expulsés et environ 30 % des clous de 4 mm de diamètre le sont aussi. Les clous de diamètre 3 mm restent normalement dans le sommet du pneumatique. Les vis ne sont pas non plus expulsées pendant le roulage, le filetage augmente l'effort nécessaire pour les extraire.

Il est à noter que dans le cas de certains types ou dimensions de pneumatiques, les clous de diamètre 3 mm peuvent aussi être expulsés.

Après le roulage, une phase de refroidissement de 4 heures au minimum est respectée.

Le résultat du test est une observation qualitative des fuites de chaque perforation, avant extraction (si l'objet perforant est toujours présent après le roulage), après extraction et environ 10 mn après l'extraction.

De manière non couverte par l'invention, les fuites sont évaluées avec l'aide d'un agent tensio-actif, par exemple une bombe aérosol de la marque « 1000 bulles ». Le produit est projeté sur la perforation et l'observateur note la présence, la taille et le nombre des bulles avec l'aide d'une loupe et sous un fort éclairage.

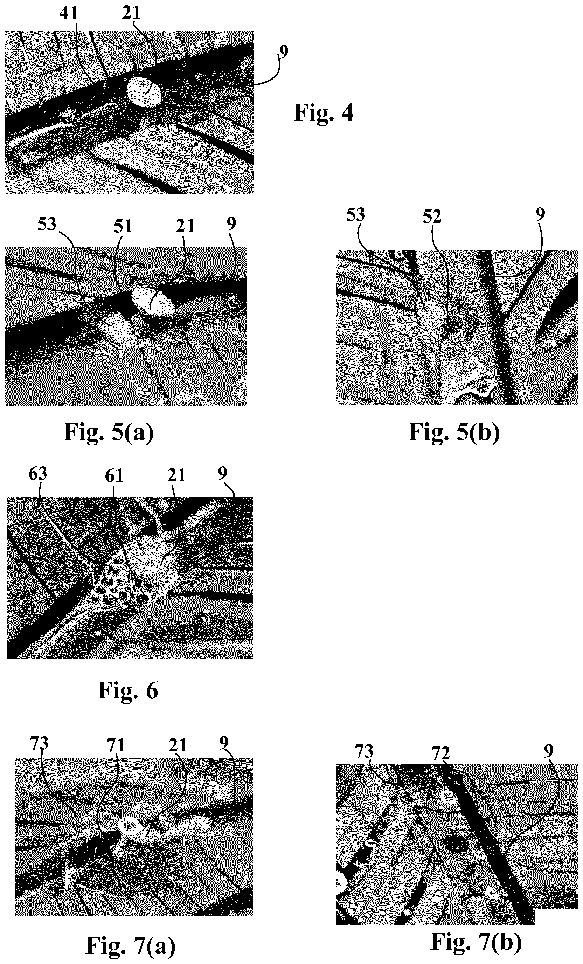

Les figures 4 à 7 illustrent les différents cas observés avec les objets perforants en place (Fig. 4, 5(a), 6 et 7(a)) et après son extraction ou éjection (Fig. 5(b), 7(b)).

A la fig. 4, on voit un clou 21 traversant une perforation 41 disposée dans le sillon longitudinal 9 du pneumatique. On ne voit aucune bulle, il n'y a pas de fuite, la perforation est notée 10 ou 100%.

A la figure 5(a), on voit un objet perforant 21 traversant une perforation 51 disposée dans le sillon longitudinal 9 du pneumatique. L'application du produit tensio-actif permet de visualiser un grand nombre de très très petites bulles 51, seulement visibles à la loupe et de diamètre inférieur à 0,1 mm. Il s'agit d'une très faible fuite, notée 8 ou 80%.

A la figure 5(b), on voit une perforation 52 faite par un objet perforant qui a été expulsé ou extrait. La perforation 52 est aussi située dans le sillon longitudinal extérieur 9 du pneumatique. L'application de produit tensio-actif permet aussi de visualiser un grand nombre de très très petites bulles 51, visibles à la loupe et de diamètre inférieur à 0,1 mm. On donne la même notation 8 ou 80%.

A la figure 6, on voit un objet perforant 21 traversant une perforation 61 disposée dans le sillon longitudinal extérieur 9 du pneumatique. Là l'application du produit tensio-actif permet de visualiser un ensemble de petites bulles 63 de diamètre sensiblement compris entre 0,1 mm et 1 mm. Il s'agit d'une faible fuite notée 6 ou 60%.

A la figure 7(a), on voit un objet perforant 21 traversant une perforation 71 disposée toujours dans un sillon longitudinal du pneumatique. L'application du produit tensio-actif permet de visualiser une seule grosse bulle 73 de diamètre supérieur à 1 mm. On est en présence d'une fuite notée 0 ou 0%.

A la figure 7(b), on voit dans le sillon longitudinal du pneumatique une perforation 72 dons l'objet perforant a été expulsé pendant le roulage ou extrait après l'arrêt. De la même manière, on ne voit qu'une seule grosse bulle 73 de diamètre supérieur à 1 mm. Il s'agit d'une fuite notée 0 ou 0%.

Les tableaux suivants présentent les résultats du test.

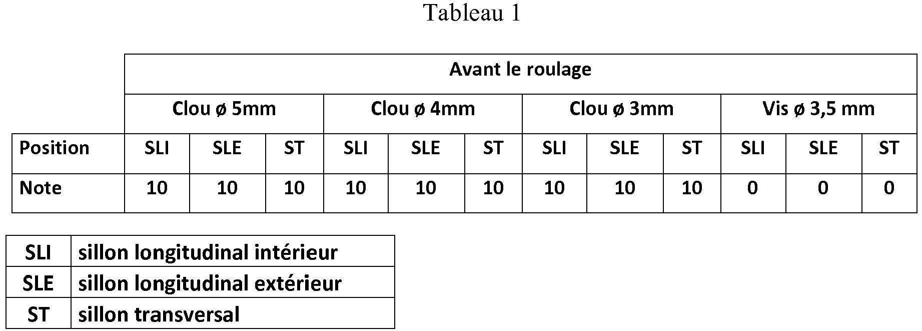

Le tableau 1 ci-dessus présente les résultats observés lors de la mise en place des objets perforants dans le sommet du pneumatique. 12 objets perforants ont été insérés, de quatre types différents et chaque type à trois positions comme indiqué.

On note que l'insertion des vis 25 entraîne dans cet exemple l'apparition d'une fuite immédiate. Cependant celle-ci disparaît usuellement lors du roulage du pneumatique.

**Tableau 2 - Indice I_{P}**

| Tableau 2 | **Après le roulage, objets perforants en place dans le pneumatique** | | | | | | | | | | | |
|---|---|---|---|---|---|---|---|---|---|---|---|---|
| | **Clou ø 5mm** | | | **Clou ø 4mm** | | | **Clou ø 3mm** | | | **Vis ø 3,5 mm** | | |
| **Position** | **SLI** | **SLE** | **ST** | **SLI** | **SLE** | **ST** | **SLI** | **SLE** | **ST** | **SLI** | **SLE** | **ST** |
| **Note** | **x** | **x** | **x** | **10** | **10** | **10** | **10** | **10** | **10** | **10** | **10** | **10** |

**Tableau 3 : rappel du barème de notation**

| | |
|---|---|
| **10** | **pas de fuite** |
| **8** | **très faible fuite** |
| **6** | **faible fuite** |
| **0** | **fuite** |
| **x** | **objet éjecté** |

Le tableau 2 donne les résultats obtenus pour les objets perforants qui sont restés en place dans le sommet du pneumatique. Comme précédemment indiqué, les clous de diamètre 5 mm ont été éjectés, mais aucune perforation avec les objets en place ne présente de fuite. Les indices I_{P} pour toutes les perforations avec objet perforant en place sont tous égaux à 10.

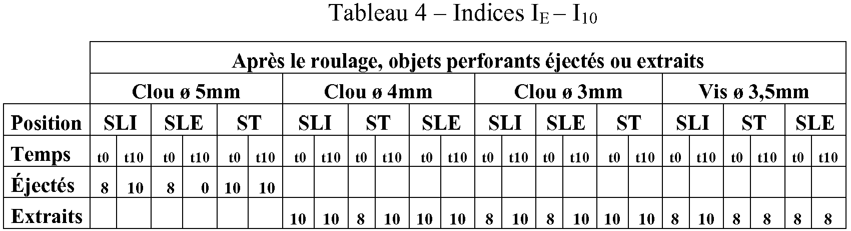

Le tableau 4 donne les résultats obtenus après le roulage et après l'extraction de tous les objets perforants encore en place. On note qu'il y a deux notes, la première au temps t0, immédiatement après l'extraction et t10, 10 minutes après celle-ci.

On peut remarquer la plus grande dispersion des résultats obtenus pour les objets de plus grand diamètre et que les résultats sont meilleurs 10 minutes après l'extraction qu'immédiatement après celle-ci.

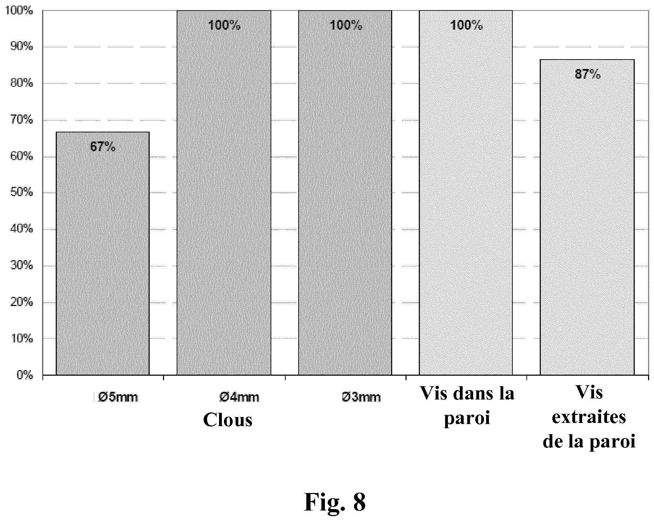

La figure 8 donne une visualisation graphique I₁₀ des résultats obtenus à t10 en fonction de la nature des objets perforants.

Aucune fuite n'est observée pour les clous de diamètres 3 et 4 mm et les vis restées dans le pneumatique, mais il y a une dégradation à 67 % pour les clous de diamètre 5 mm et à 87% pour les vis après leur extraction.

On peut aussi calculer un taux de couverture en pondérant les indices I₁₀ par la distribution des diamètres de clous en clientèle (voir Fig. 2). Dans le cas décrit, cela amène à une valeur globale de 94 %, ce qui est un excellent résultat.

Le même pneumatique a ensuite subi un roulage complémentaire après la détermination des indices de résistance à la perte de pression après éjection ou retrait des objets perforants pour toutes les perforations. On a constaté à la fin de ce roulage complémentaire que tous les indices étaient de 10 ou 100%, il n'y avait plus de fuites.

La note de synthèse telle que précédemment décrite n'est pas la seule envisageable. D'autres notes de synthèse sont possibles, combinant par exemple la note des clous et la note des vis, avec une certaine pondération. Bien évidemment les notes des différentes étapes du test sont aussi utilisables séparément (par exemple la note des clous ou des vis avant arrachage et après arrachage).

Le test décrit concernait un pneumatique équipé lors de sa fabrication d'une couche de produit auto-obturant. De manière non couverte par l'invention, le test décrit permet aussi de tester les autres solutions telles les bombes anti-crevaison et les kits de réparation.

Des essais ont été réalisés avec ces autres solutions. On constate que les performances d'obturation sont pratiquement de 100% pour toutes les solutions lors d'une crevaison avec retrait instantané de l'objet perforant. En revanche, lors d'un roulage avec objet perforant en place, dès 200 à 300 km de roulage, la performance des bombes anti-crevaison devient nulle, le produit sort par les perforations. En ce qui concerne les kits de réparation, leurs performances sont meilleures mais diminuent très fortement aussi avec la longueur du roulage effectué avec les objets perforants en place.

Le test ainsi décrit a l'avantage d'être très sélectif et d'être basé sur l'analyse des débits de fuite de chaque perforation et non sur une perte de pression ce qui permet d'obtenir de nombreux résultats avec un seul pneumatique.

## Revendications

1. Méthode de test de la résistance d'un pneumatique (1) à une perte de pression consécutive à une perforation (41, 51, 52, 61, 71, 72), comportant les étapes suivantes :
- créer dans la paroi dudit pneumatique (1) une pluralité de perforations (41, 51, 52, 61, 721, 72) en insérant à travers ladite paroi une pluralité d'objets perforants (21, 22, 23, 25);
- faire rouler le pneumatique (1) comportant les objets perforants (21, 22, 23, 25) sur une distance donnée;
- arrêter le roulage ; et
- déterminer pour chaque perforation (41, 51, 52, 61, 71, 72) un indice de résistance à la perte de pression (I_{P}, I_{E}, I₁₀,I_{M}) basé sur une estimation du débit de fuite de ladite perforation (41, 51, 52, 61, 71, 72),
**caractérisé en ce que** le roulage est effectué avec une pression de gonflage régulée.

2. Méthode de test selon la revendication 1, dans laquelle, lorsque les ou des objets perforants (21, 22, 23, 25) sont restés en place pendant le roulage, on détermine pour chaque perforation (41, 51, 61, 71) dont l'objet perforant (21, 22, 23, 25) est resté en place pendant le roulage un indice de résistance à la perte de pression avec objet perforant en place (I_{P}) basé sur une estimation du débit de fuite.

3. Méthode de test selon l'une quelconque des revendications précédentes, dans laquelle, lorsque les ou des objets perforants (21, 22, 23, 25) ont été éjectés de la paroi du pneumatique (1) pendant le roulage, on détermine pour chaque perforation (52, 72) dont l'objet perforant (21, 22, 23, 25) a été éjecté pendant le roulage un indice de résistance à la perte de pression après éjection de l'objet perforant (I_{E}) basé sur une estimation du débit de fuite.

4. Méthode de test selon l'une quelconque des revendications précédentes, comportant à l'arrêt du roulage les étapes complémentaires suivantes :
- extraire l'objet perforant (21, 22, 23, 25) de la ou les perforations (41, 51, 52, 61, 71, 72) ayant un objet perforant (21, 22, 23, 25) en place ; et
- déterminer pour chaque perforation (41, 51, 52, 61, 71, 72) dont l'objet perforant (21, 22, 23, 25) a été éjecté pendant le roulage ou extrait à l'issue du roulage un indice de résistance à la perte de pression (I_{E}) basé sur une estimation du débit de fuite.

5. Méthode de test selon l'une quelconque des revendications 1 à 4, comportant l'étape complémentaire suivante :
- redéterminer après un temps donné, de l'ordre de 5 à 20 mn, pour chaque perforation (41, 51, 52, 61, 71, 72) dont l'objet perforant (21, 22, 23, 25) a été éjecté pendant le roulage ou extrait à l'issue du roulage un indice de résistance à la perte de pression (I₁₀) basé sur une estimation du débit de fuite.

6. Méthode de test selon l'une quelconque des revendications précédentes, dans laquelle la distance de roulage du pneumatique (1) comportant une pluralité de perforations (41, 51, 52, 61, 71, 72) à travers sa paroi est supérieure à 200 km et de préférence supérieure à 500 km.

7. Méthode de test selon l'une quelconque des revendications précédentes, dans laquelle le roulage dudit pneumatique (1) est effectué sur un volant de développement supérieur à 16 m.

8. Méthode de test selon l'une quelconque des revendications précédentes, dans laquelle le pneumatique (1) est gonflé avant d'insérer la pluralité d'objets perforants (21, 22, 23, 25) à travers la paroi dudit pneumatique (1).

9. Méthode de test selon l'une quelconque des revendications précédentes, dans laquelle la vitesse de roulage est supérieure à 90 km/h et de préférence comprise entre 90 et 160 km/h.

10. Méthode de test selon la revendication 9, dans laquelle la vitesse de roulage varie par paliers de vitesses croissantes.

11. Méthode de test selon l'une quelconque des revendications 4 à 10, comportant après l'arrêt du roulage, l'extraction de tous les objets perforants (21, 22, 23, 25) en place et la détermination du ou des indices de résistance à la perte de pression selon l'étape complémentaire suivante :
- faire rouler le pneumatique (1) gonflé sans objet perforant (21, 22, 23, 25) en place ; et
- déterminer pour chaque perforation (41, 51, 52, 61, 71, 72) un indice de résistance à la perte de pression basé sur une estimation du débit de fuite.

12. Méthode de test selon la revendication 11, dans laquelle la distance de roulage complémentaire sans objet perforant est comprise entre 100 et 500 km.

13. Méthode de test selon l'une quelconque des revendications précédentes, dans laquelle la pluralité d'objets perforants comprend des vis (25) et des clous de diamètres variés (21, 22, 23) et de 3 à 30 objets perforants (21, 22, 23, 25), préférentiellement entre 8 et 20.

14. Méthode de test selon l'une quelconque des revendications précédentes, dans laquelle le diamètre du ou des objets perforants (21, 22, 23, 25) est de 1 à 5 mm.

15. Méthode de test selon l'une quelconque des revendications précédentes, dans laquelle le ou les objets perforants (21, 22, 23, 25) sont insérés dans le sommet (3) du pneumatique (1).

## Patentansprüche

1. Verfahren zur Prüfung der Beständigkeit eines Reifens (1) gegenüber einem Druckverlust nach einer Perforierung (41, 51, 52, 61, 71, 72), das die folgenden Schritte aufweist:
- Erzeugen, in der Wand des Reifens (1), einer Mehrzahl von Perforierungen (41, 51, 52, 61, 721, 72) durch Einführen einer Mehrzahl von perforierenden Gegenständen (21, 22, 23, 25) durch die Wand;
- Rollenlassen des Reifens (1), der die perforierenden Gegenstände (21, 22, 23, 25) aufweist, über eine bestimmte Strecke;
- Anhalten des Rollens; und
- Bestimmen, für jede Perforierung (41, 51, 52, 61, 71, 72), eines Druckverlustbeständigkeitsindexes (Ip, I_{E}, I₁₀, I_{M}) auf Grundlage einer Schätzung des Austrittsdurchsatzes der Perforierung (41, 51, 52, 61, 71, 72),
**dadurch gekennzeichnet, dass** das Rollen mit einem geregelten Aufblasdruck durchgeführt wird.

2. Prüfverfahren nach Anspruch 1, wobei, wenn die perforierenden Gegenstände oder perforierende Gegenstände (21, 22, 23, 25) während des Rollens an Ort und Stelle verblieben sind, für jede Perforierung (41, 51, 61, 71), bei welcher der perforierende Gegenstand (21, 22, 23, 25) während des Rollens an Ort und Stelle verblieben ist, ein Druckverlustbeständigkeitsindex mit dem perforierenden Gegenstand an Ort und Stelle (Ip) auf Grundlage einer Schätzung des Austrittsdurchsatzes bestimmt wird.

3. Prüfverfahren nach einem der vorhergehenden Ansprüche, wobei, wenn die perforierenden Gegenstände oder perforierende Gegenstände (21, 22, 23, 25) während des Rollens aus der Wand des Reifens (1) herausgeschleudert wurden, für jede Perforierung (52, 72) bei welcher der perforierende Gegenstand (21, 22, 23, 25) während des Rollens herausgeschleudert wurde, ein Druckverlustbeständigkeitsindex nach Herausschleudern des perforierenden Gegenstands (I_{E}) auf Grundlage einer Schätzung des Austrittsdurchsatzes bestimmt wird.

4. Prüfverfahren nach einem der vorhergehenden Ansprüche, aufweisend, beim Anhalten des Rollens, die folgenden ergänzenden Schritte:
- Entfernen des perforierenden Gegenstands (21, 22, 23, 25) aus der oder den Perforierungen (41, 51, 52, 61, 71, 72), bei denen sich ein perforierender Gegenstand (21, 22, 23, 25) an Ort und Stelle befindet;
und
- Bestimmen, für jede Perforierung (41, 51, 52, 61, 71, 72), bei welcher der perforierende Gegenstand (21, 22, 23, 25) während des Rollens herausgeschleudert oder nach dem Rollen entfernt wurde, eines Druckverlustbeständigkeitsindexes (I_{E}) auf Grundlage einer Schätzung des Austrittsdurchsatzes.

5. Prüfverfahren nach einem der Ansprüche 1 bis 4, aufweisend den folgenden ergänzenden Schritt:
- erneutes Bestimmen, nach einer bestimmten Zeit in der Größenordnung von 5 bis 20 min., für jede Perforierung (41, 51, 52, 61, 71, 72), bei welcher der perforierende Gegenstand (21, 22, 23, 25), während des Rollens herausgeschleudert oder nach dem Rollen entfernt wurde, eines Druckverlustbeständigkeitsindexes (I₁₀) auf Grundlage einer Schätzung des Austrittsdurchsatzes.

6. Prüfverfahren nach einem der vorhergehenden Ansprüche, wobei die Rollstrecke des Reifens (1), der eine Mehrzahl von Perforierungen (41, 51, 52, 61, 71, 72) durch seine Wand aufweist, größer als 200 km und vorzugsweise größer als 500 km ist.

7. Prüfverfahren nach einem der vorhergehenden Ansprüche, wobei das Rollen des Reifens (1) auf einem Rad mit einer Abrollstrecke größer als 16 m durchgeführt wird.

8. Prüfverfahren nach einem der vorhergehenden Ansprüche, wobei der Reifen (1) aufgeblasen wird, bevor die Mehrzahl von perforierenden Gegenständen (21, 22, 23, 25) durch die Wand des Reifens (1) eingeführt wird.

9. Prüfverfahren nach einem der vorhergehenden Ansprüche, wobei die Rollgeschwindigkeit größer als 90 km/h ist und vorzugsweise zwischen 90 und 160 km/h liegt.

10. Prüfverfahren nach Anspruch 9, wobei die Rollgeschwindigkeit in ansteigenden Geschwindigkeitsstufen variiert.

11. Prüfverfahren nach einem der Ansprüche 4 bis 10, aufweisend, nach dem Anhalten des Rollens, das Entfernen aller vorhandener perforierender Gegenstände (21, 22, 23, 25) und das Bestimmen des oder der Druckverlustbeständigkeitsindexe gemäß dem folgenden ergänzenden Schritt:
- Rollenlassen des aufgeblasenen Reifens (1) ohne vorhandenen perforierenden Gegenstand (21, 22, 23, 25); und
- Bestimmen, für jede Perforierung (41, 51, 52, 61, 71, 72), eines Druckverlustbeständigkeitsindexes auf Grundlage einer Schätzung des Austrittsdurchsatzes.

12. Prüfverfahren nach Anspruch 11, wobei die ergänzende Rollstrecke ohne perforierenden Gegenstand zwischen 100 und 500 km liegt.

13. Prüfverfahren nach einem der vorhergehenden Ansprüche, wobei die Mehrzahl von perforierenden Gegenständen Schrauben (25) und Nägel unterschiedlicher Durchmesser (21, 22, 23) und von 3 bis 30 perforierende Gegenstände (21, 22, 23, 25) umfasst, vorzugsweise zwischen 8 und 20.

14. Prüfverfahren nach einem der vorhergehenden Ansprüche, wobei der Durchmesser des oder der perforierenden Gegenstände (21, 22, 23, 25) von 1 bis 5 mm beträgt.

15. Prüfverfahren nach einem der vorhergehenden Ansprüche, wobei der oder die perforierenden Gegenstände (21, 22, 23, 25) in den Scheitel (3) des Reifens (1) eingeführt werden.

## Claims

1. Method for testing a resistance of a tyre (1) to a loss in pressure following puncturing of the tyre, **characterized in that** the method comprising steps of:
- creating a plurality of punctures (41, 51, 52, 61, 71, 72) in a wall of the tyre (1) by inserting a plurality of puncturing objects (21, 22, 23, 25) through the wall;
- running the tyre (1) with the puncturing objects (21, 22, 23, 25) in the wall thereof over a given distance;
- stopping the running of the tyre (1);
- determining, for each puncture (41, 51, 52, 61, 71, 72), a pressure loss resistance index (I_{P}, I_{E}, 1₁₀, 1_{M}) based on an estimate of a leak rate of the puncture (41, 51, 52, 61, 71, 72), and
characterized, during the running step, the tyre (1) is inflated with a regulated inflation pressure.

2. Method for testing according to claim 1, wherein, when at least one of the puncturing objects(21, 22, 23, 25) has remained in place during the running step, for each puncture (41, 51, 61, 71) corresponding to a puncturing object (21, 22, 23, 25) that has remained in place during the running step, a pressure loss resistance with the puncturing object in place index (I_{P}) is determined based on an estimate of a leak rate.

3. Method for testing according to one of the preceeding claims wherein, when at least one of the puncturing objects (21, 22, 23, 25) has been ejected from the wall of the tyre during the running step, for each puncture (52, 72) corresponding to a puncturing object (21, 22, 23, 25) that has been ejected during the running step, a pressure loss resistance after ejection of the puncturing object index (I_{E}) is determined based on an estimate of a leak rate.

4. Method for testing according to on of the preeceeding claims, further comprising steps of, after the running step:
- extracting each puncturing object (21, 22, 23, 25) still in place after the running step; and
- determining, for each puncture (41, 51, 52, 61, 71, 72) corresponding to a puncturing object (21, 22, 23, 25) that has been ejected during the running step or that has been extracted in the extracting step, a pressure loss resistance index (I_{E}) based on an estimate of a leak rate.

5. Method for testing according to one of the claims 1 to 4, further comprising step of
- redetermining, after a given time of 5 to 20 minutes, for each puncture (41, 51, 52, 61, 71, 72) corresponding to a puncturing object (21, 22, 23, 25) that has been ejected during the running step or that has been extracted after the running step, a pressure loss resistance index (I₁₀) based on an estimate of a leak rate.

6. Method for testing according to one of the preceeding claims, wherein, during the running step, the tyre (1) comprising a plurality of punctures (41, 51, 52, 61, 71, 72) in a wall of the tyre (1) is run a distance greater than 200 km, with greater than 500 km being preferable for the distance.

7. Method for testing according to one of the preceeding claims, wherein, during the running step, the tyre (1) is run on a rolling road which has a developed length greatet than 16m.

8. Method for testing according to one of the preceeding claims, wherein the tyre (1) is inflated before the puncturing objects (21, 22, 23, 25) are inserted through the wall of the tyre.(1)

9. Method for testing according to one of the preceeding claims, wherein, during the running step, the tyre (1) is run at a speed greater than 90 km/h, with between 90 and 160 km/h being preferable for the speed.

10. Method for testing according to claim 9, wherein, during the running step, the speed varies in steps of increasing speed.

11. Method for testing according to one the claims 4 to 10 , further comprising steps of, after the running step, after the extracting step, and after the determining step:
- running the tyre (1) in an inflated condition for an additional distance without a puncturing object (21, 22, 23, 25) in place; and
- determining, for each puncture (41, 51, 52, 61, 71, 72), a pressure loss resistance index based on an estimate of a leak rate.

12. Method for testing according to claim 11, wherein, during the additional distance run by the tyre (1) is between 100 and 500 km.

13. Method for testiing according to one of the preceeding claims, wherein the puncturing objects include screws (25) and nails (21, 22, 23) of various diameters. and 3 to 30 puncturing objects, with between 8 and 20 puncturing objects being preferable.

14. Method for testing according to one of the preceeding claims, wherein a diameter of at least one of the puncturing objects (21, 22, 23, 25h) is from 1 to 5 mm.

15. Method for testing according to one of the preceeding claims, wherein at least one of the puncturing objects(21, 22, 23, 25) is inserted through a crown (3) portion of the tyre (1).
